# EUROPÄISCHE PATENTSCHRIFT

(11) **EP 3 165 091 B1**
(45) Veröffentlichungstag und Bekanntmachung des Hinweises auf die Patenterteilung: **26.09.2018**
(21) Anmeldenummer: 16401085.2
(22) Anmeldetag: 02.11.2016
(51) Int. Cl.: A01M 7/00

(54) **REGEL- ODER STEUERSYSTEM FÜR EINE LANDWIRTSCHAFTLICHE MASCHINE**
REGULATING OR CONTROL SYSTEM FOR AN AGRICULTURAL MACHINE
SYSTÈME DE COMMANDE ET DE RÉGLAGE D'UNE MACHINE AGRICOLE

(30) Priorität: 06.11.2015 DE 102015119078
(43) Veröffentlichungstag der Anmeldung: 10.05.2017
(73) Patentinhaber: Amazonen-Werke H. Dreyer GmbH & Co. KG, 49205 Hasbergen (DE)
(72) Erfinder: große Prues, Frank, 49434 Neuenkirchen-Vörden (DE); Heer, Jochen, 49074 Osnabrück (DE)

(56) Entgegenhaltungen:
- EP-A1- 1 444 894
- WO-A1-2008/098290
- US-A- 5 279 068
- US-A1- 2011 153 168

## Beschreibung

Die Erfindung bezieht sich auf ein Regel- oder Steuersystem für eine landwirtschaftliche Maschine mit den Merkmalen des Oberbegriffs des Anspruchs 1. Die Erfindung bezieht sich ferner auf eine landwirtschaftliche Maschine mit einem solchen System und ein Verfahren zum Betreiben der landwirtschaftlichen Maschine sowie auf ein Verfahren zum Herstellen der landwirtschaftlichen Maschine. Ein Regel- oder Steuersystem der eingangs genannten Art ist beispielsweise aus EP 1 444 894 A1 bekannt. Die bekannte Maschine ist als Feldspritze mit einem Verteilergestänge ausgebildet, das zum Ausbringen von Düngemittel oder Pflanzenschutzmittel verwendet wird. Dazu sind am Verteilergestänge mehrere Düsen angebracht, die mit einem Vorratsbehälter über ein Pumpensystem verbunden sind. Für eine gleichmäßige Ausbringung des Düngemittels bzw. Pflanzenschutzmittels kommt es darauf an, dass das Verteilergestänge im Betrieb im Wesentlichen parallel zum Boden ausgerichtet ist. Dazu sind mehrere Abstandssensoren in der Form von Ultraschallsensoren am Verteilergestänge angebracht, mit deren Hilfe der Abstand des Verteilergestänges zum Boden gemessen wird. In Abhängigkeit von diesem Abstand und weiteren Regelparametern wird die Neigung des Verteilergestänges verstellt, um die gewünschte Parallelität zu erreichen. Die Sensoren sind entlang des Verteilergestänges an unterschiedlichen Positionen angebracht. Konkret ist ein Abstandssensor an einem Längsende und ein weiterer Abstandssensor am anderen Längsende des Verteilergestänges befestigt. Die Signale der Abstandssensoren werden in einer Datenverarbeitungseinheit verarbeitet und für die Regelung der Neigung und/oder der Höhenlage des Verteilergestänges verwendet. Weitere Stand der Technik Dokumente sind: US2011153168, WO2008098290, US5279068.

Bei der bekannten Feldspritze sind alle Sensoren mit identischem Abstand zur Unterkante des Verteilergestänges befestigt.

Der Erfindung liegt die Aufgabe zu Grunde, das vorstehend beschriebene Regel- oder Steuersystem dahingehend zu verbessern, dass die Abstandssensoren im Wesentlichen frei im Verteilergestänge angeordnet werden können, um so dem Anwender eine größere Flexibilität bei der Konfiguration der landwirtschaftlichen Maschine zu geben. Der Erfindung liegt ferner die Aufgabe zu Grunde, eine landwirtschaftliche Maschine mit einem solchen System sowie ein Verfahren zum Betreiben einer landwirtschaftlichen Maschine und ein Verfahren zum Herstellen einer landwirtschaftlichen Maschine anzugeben.

Erfindungsgemäß wird diese Aufgabe mit Blick auf das Regel- oder Steuersystem durch den Gegenstand des Anspruchs 1, mit Blick auf die landwirtschaftliche Maschine durch den Gegenstand des Anspruchs 5, mit Blick auf das Verfahren zum Betreiben durch den Gegenstand des Anspruchs 6 und mit Blick auf das Herstellverfahren durch den Gegenstand des Anspruchs 12 gelöst.

Die Erfindung beruht darauf, ein Regel- oder Steuersystem für eine landwirtschaftliche Maschine mit einem Verteilergestänge, insbesondere ein- und ausklappbaren Verteilergestänge, anzugeben, das zum Ausbringen von Material, wie Düngemittel, Pflanzenschutzmittel oder Saatgut vorgesehen ist.

Verteilergestänge mit großer Arbeitsbreite können für den Transport vertikal hochgeklappt werden. Alternativ können Verteilergestänge eine horizontale Klappung der Auslegerarme bzw. einzelner Gestänge-Segmente ermöglichen. In beiden Fälle handelt es sich um ein- und ausklappbare Verteilergestänge. Die Erfindung ist für klappbare und nicht klappbare Verteilergestänge geeignet und wird im Zusammenhang mit beiden Varianten offenbart.

Das Regel- oder Steuersystem weist mehrere Sensoren zur Ermittlung des Boden- und/oder Pflanzenabstands vom Verteilergestänge auf, die unterschiedlich positioniert sind. Zur Verarbeitung der Signale der Sensoren ist eine Datenverarbeitungseinheit vorgesehen. Die Datenverarbeitungseinheit ist für die Kalibrierung der Sensoren konfiguriert, wobei die Datenverarbeitungseinheit bei der Kalibrierung für jeden Sensor einen Korrekturwert in Abhängigkeit von seiner Höhenlage bestimmt. Die Datenverarbeitungseinheit berücksichtigt den Korrekturwert bei der Boden- und/oder Pflanzenabstandsermittlung.

Die Erfindung hat den Vorteil, dass die Sensoren im Wesentlichen frei im Verteilergestänge positioniert werden können. Damit wird ein größerer Spielraum bei der Konfiguration der Maschine erreicht. Die Maßgabe, alle Sensoren in einer Ebene anzuordnen, entfällt. Die Erfindung funktioniert auch mit einer Maschine, bei der die Sensoren in einer Ebene parallel zum Boden angeordnet sind. Der Vorteil der Erfindung kommt besonders dann zum Tragen, wenn die Sensoren in unterschiedlichen Höhen im Verteilergestänge positioniert sind. Dazu sieht die Erfindung vor, dass die Datenverarbeitungseinheit für die Kalibrierung der Sensoren konfiguriert ist. Der sich bei der Kalibrierung ergebende sensorspezifische Korrekturwert reflektiert die Höhenlage des jeweiligen Sensors. Im Betrieb wird dieser Korrekturwert bei der Boden- und/oder Pflanzenabstandsermittlung berücksichtigt, so dass die unterschiedlichen Höhenlagen der Sensoren bei der Abstandsermittlung zwischen Verteilergestänge und Boden durch Berücksichtigung des Korrekturwertes kompensiert werden.

Bevorzugte Ausführungsformen der Erfindung sind in den Unteransprüchen angegeben.

Bei einer besonders bevorzugten Ausführung vergleicht die Datenverarbeitungseinheit den Korrekturwert mit dem jeweils gemessenen Abstandswert im eingeklappten Zustand des Verteilergestänges. Die Datenverarbeitung gibt eine Fehlermeldung in Abhängigkeit von dem gemessenen Abstandswert und dem Korrekturwert aus. Durch die Kalibrierung wird also nicht nur die Flexibilität der Anordnung der Sensoren verbessert, sondern auch die Möglichkeit geschaffen, eine Fehlerquelle im Betrieb der Maschine auszumerzen. Der Korrekturwert wird nämlich nicht nur zum Kompensieren der unterschiedlichen Höhenlagen verwendet, sondern auch als Referenzwert, der zusammen mit dem gemessenen Abstandswert ein Entscheidungskriterium dafür gibt, dass der entsprechende Sensor korrekt arbeitet. Wenn beispielsweise ein Segment des Verteilergestänges eingeklappt ist und im eingeklappten Zustand einen Abstandssensor abschattet, ermöglicht der Vergleich zwischen dem Korrekturwert und dem mit dem abgeschatteten Sensor gemessenen Abstandswert eine Prüfung, die dann letztendlich zu einer Fehlermeldung führt. Andere Störsituationen, die zu einer Abschattung eines Sensors führen, beispielsweise durch die Anbringung von Einbauten unterhalb des Sensors, können ebenfalls erfasst werden.

Vorzugsweise wird bei der Ausgabe der Fehlermeldung der fehlerhafte Sensor automatisch abgeschaltet und für die Neigungs- und/oder Höhenregelung nicht mehr verwendet.

Konkret kann die Datenverarbeitungseinheit eine Fehlermeldung ausgeben, wenn der Abstandswert kleiner als der Korrekturwert ist. Andere Beziehungen zwischen dem Korrekturwert und dem gemessenen Abstandswert sind möglich, die zu einer Fehlermeldung führen.

Die Plausibilitätsprüfung wird verbessert, wenn die Datenverarbeitungseinheit bei der Ausgabe der Fehlermeldung die Sensorposition und/oder die Bauart des Verteilergestänges und/oder den Klappzustand des Verteilergestänges berücksichtigt.

Das erfindungsgemäße Verfahren zum Betreiben einer landwirtschaftlichen Maschine beruht darauf, dass Material wie Düngemittel, Pflanzenschutzmittel oder Saatgut aus einem Vorratsbehälter durch ein Verteilergestänge, insbesondere ein klappbares Verteilergestänge ausgebracht wird, das mehrere unterschiedlich angeordnete Sensoren zur Ermittlung des Boden- und/oder Pflanzenabstands aufweist. Die Sensoren werden kalibriert, wobei für jeden Sensor in Abhängigkeit von seiner Höhenlage ein Korrekturwert bestimmt wird, der bei der Boden- und/oder Pflanzenabstandsermittlung berücksichtigt wird. Das Verfahren bietet den Vorteil, dass die Sensoren in unterschiedlichen Höhenlagen im Verteilergestänge angeordnet werden können, wodurch die Flexibilität im Betrieb verbessert wird.

Vorzugsweise wird der Korrekturwert mit dem von den Sensoren jeweils gemessenen Abstandswert im eingeklappten Zustand des Verteilergestänges verglichen und eine Fehlermeldung in Abhängigkeit von gemessenem Abstandswert und dem Korrekturwert ausgegeben.

Bei einer weiteren bevorzugten Ausführung des Verfahrens wird zum Kalibrieren der Sensoren jeweils der vertikale Abstand zwischen einem Sensor und einem Referenzpunkt gemessen, der im Betrieb der Maschine relativ zum Sensor ortsfest ist. Dieser gemessene vertikale Abstand wird als Korrekturwert bei der Boden- und/oder Pflanzenabstandsermittlung berücksichtigt. Die Einzelkalibrierung der Sensoren anhand eines Referenzpunkts lässt sich einfach bewerkstelligen. Es bietet sich an, einen Referenzpunkt für jeden Sensor zu wählen, der bezogen auf das Verteilergestänge in derselben Ebene liegt. Beispielsweise kann der Referenzpunkt die Unterkante des Verteilergestänges umfassen. Bei mehreren Sensoren sind alle Referenzpunkte an der Unterkante des Verteilergestänges angeordnet. Mit anderen Worten wird der Abstand der unterschiedlich hoch positionierten Sensoren bezogen auf die Unterkante als Referenzlinie gemessen. Andere Referenzlinien sind möglich.

Eine Kalibrierung aller Sensoren zusammen ist möglich, wenn zum Kalibrieren der Sensoren das Verteilergestänge vollständig ausgeklappt, über einer ebenen Fläche positioniert und zur Einstellung eines einheitlichen Kalibrierabstandes zwischen dem Verteilergestänge und der Fläche parallel zu dieser ausgerichtet wird. Dabei wird der jeweilige Kalibrierabstand zwischen der Fläche und den Sensoren gemessen und als Korrekturwert bei der Boden- und/oder Pflanzenabstandsermittlung berücksichtigt. Diese Ausführungsform des erfindungsgemäßen Verfahrens ist besonders effizient und schnell.

Zum Kalibrieren der Sensoren kann unter dem jeweiligen Sensor eine Platte mit einem vorgegebenen Kalibrierabstand zum Verteilergestänge angeordnet werden. Der jeweilige Kalibrierabstand zwischen der Platte und dem jeweiligen Sensor wird gemessen und als Korrekturwert bei der Boden- und/oder Pflanzenabstandsermittlung berücksichtigt. Diese Art der Kalibrierung bietet sich an, wenn keine größere ebene Fläche verfügbar ist, über der das Verteilergestänge positioniert werden kann.

Die Erfindung umfasst ferner ein Verfahren zum Herstellen einer landwirtschaftlichen Maschine zum Ausbringen von Material, wie Düngemittel, Pflanzenschutzmittel oder Saatgut, mit einem Vorratsbehälter, der mit einem Abgabeorgan für das Material verbunden oder verbindbar ist, einem, insbesondere klappbaren, Verteilergestänge und einem Regel- oder Steuersystem nach einem der Ansprüche 1-4. Bei dem Herstellverfahren werden die Sensoren zur Ermittlung des Boden- und/oder Pflanzenabstands in verschiedenen Höhenlagen am Verteilergestänge befestigt.

Das erfindungsgemäße Regel- oder Steuersystem ermöglicht die Kalibrierung der unterschiedlich hoch angebrachten Sensoren, so dass ein ordnungsgemäßer Betrieb der Maschine ermöglicht wird.

Die Erfindung wird nachfolgend unter Bezug auf die beigefügten schematischen Zeichnungen mit weiteren Einzelheiten anhand eines Ausführungsbeispiels näher erläutert.

In diesen zeigen
- Fig. 1: einen Ausschnitt aus einem Verteilergestänge einer landwirtschaftlichen Maschine mit zwei Sensoren, die in unterschiedlichen Höhen angeordnet sind;
- Fig. 2: ein Beispiel für ein Verteilergestänge mit einem klappbaren Auslegerarm;
- Fig. 3: ein Beispiel für einen abgeschatteten Sensor an einem eingeklappten Verteilergestänge und
- Fig. 4: eine schematische Heckansicht eines klappbaren Verteilergestänges mit verschiedenen Sensoren in unterschiedlichen Höhen.

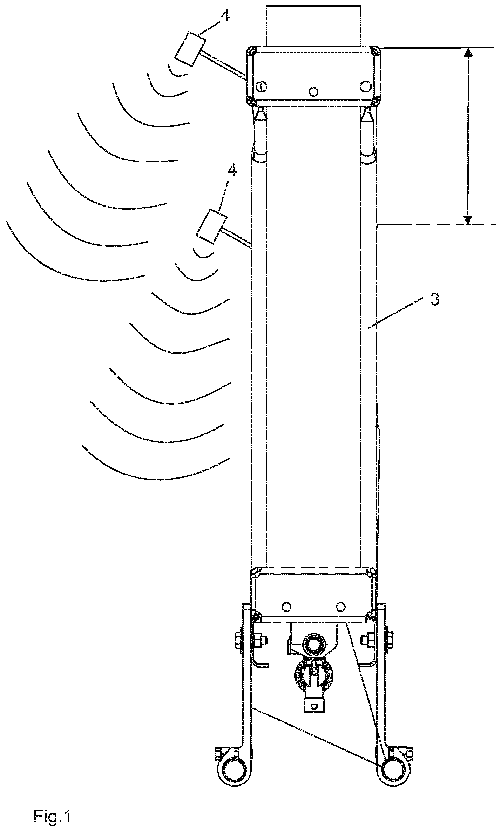

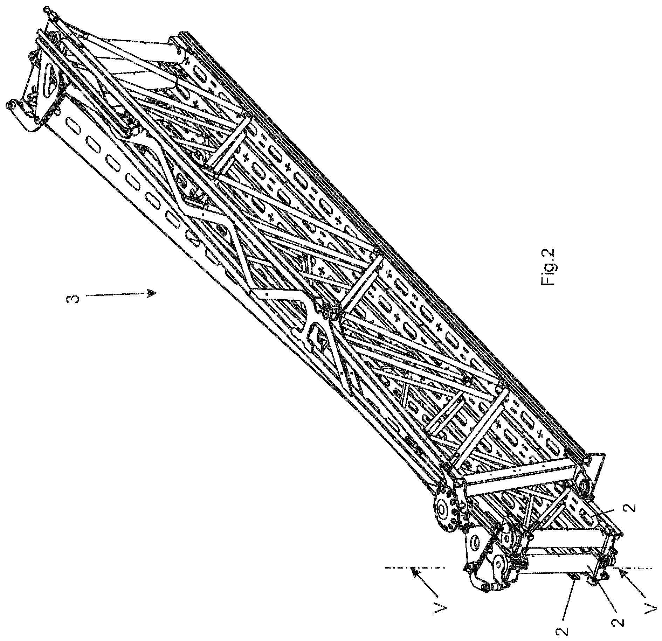

Fig. 1 zeigt einen Ausschnitt eines Verteilergestänges 3, das mehrere horizontal klappbare Auslegerarmen aufweist. Das Verteilergestänge ist in Fig. 2 im eingeklappten Zustand dargestellt. Durch die ein- bzw. ausklappbaren Auslegerarme des Verteilergestänges 3 lässt sich die Arbeitsbreite einstellen. Das in den Figuren dargestellte Verteilergestänge 3 gehört zu einer landwirtschaftlichen Maschine, die als Feldspritze ausgebildet ist. An der Unterseite des Verteilergestänges sind Düsenkörper angeordnet, die über ein Pumpensystem mit einem Vorratsbehälter verbunden sind und als Abgabeorgan für das Material, insbesondere Düngemittel oder Pflanzenschutzmittel dienen (nicht dargestellt). Das Verteilergestänge kann an einer gezogenen, selbstfahrenden oder getragenen Maschine (Anbau), insbesondere Feldspritze angebracht sein. Derartige Verteilergestänge sind, was die Mechanik und Aktorik betrifft, bekannt.

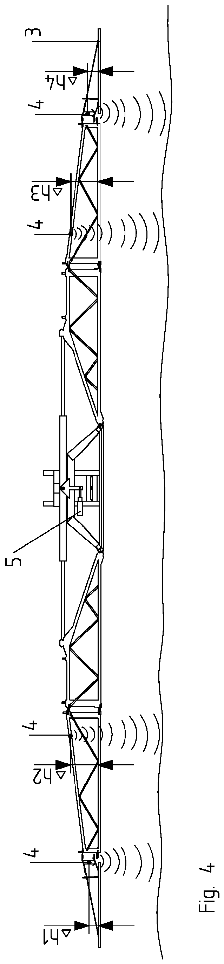

In Fig. 4 ist ein Beispiel für eine Aufhängung eines klappbaren Verteilergestänges 3 dargestellt, das um eine in Fahrtrichtung weisende Achse verschwenkbar ist. Andere Verteilergestänge, beispielsweise mit einem drehfest angeordneten Mittelteil und nach oben und unten verschwenkbaren Auslegerarmen sind von der Erfindung ebenfalls umfasst. Das Verteilergestänge 3 kann an einem höhenverstellbaren Hubrahmen oder Parallelogramm-Gestänge befestigt sein. Auch derartige höhenverstellbare Verteilergestänge sind an sich bekannt. Zur Neigungsregelung des Verteilergestänges 3 mit Bezug auf den Boden weist das Verteilergestänge 3 mehrere Sensoren 4 auf, die in den Fig. 1 und 4 beispielhaft gezeigt sind. Die Sensoren 4 gehören zu einem Regel- oder Steuersystem und sind mit einer Datenverarbeitungseinheit zur Verarbeitung der Sensorsignale verbunden oder verbindbar. Die Datenverarbeitungseinheit steuert in an sich bekannter Weise Neigungsaktoren, beispielsweise Hydraulikzylinder an. Ein solcher Zylinder ist in Fig. 4 mit dem Bezugszeichen 5 dargestellt. Andere Neigungsaktoren sind möglich.

Wie in den Fig. 1 und 4 gut zu erkennen, sind die Sensoren, konkret die Abstandssensoren in der Form von Ultraschallsensoren in unterschiedlichen Höhenlagen angeordnet. Die unterschiedliche Höhenlage zwischen zwei Sensoren 4 ist in Fig. 1 mit dem Doppelpfeil verdeutlicht. In Fig. 4 ist die unterschiedliche Höhe der Sensoren als Differenz zwischen dem Sensor und der Unterkante des Verteilergestänges angegeben (Δh1, Δh2, Δh3, Δh4). Zusätzlich zu den unterschiedlichen Höhenlagen sind die verschiedenen Sensoren 4 an unterschiedlichen Längspositionen des Verteilergestänges 3 angeordnet, um den Abstand zwischen Verteilergestänge 3 und Boden an verschiedenen Stellen zu messen.

Um der unterschiedlichen Höhenlage der verschiedenen Sensoren 4 Rechnung zu tragen, ist die Datenverarbeitungseinheit für die Kalibrierung der Sensoren 4 konfiguriert. Das bedeutet, dass die Datenverarbeitungseinheit ein Kalibriermenü aufweist, das von einem Bediener betätigbar ist. Das Kalibriermenü kann beispielsweise in der Form eines Touchscreens oder als Eingabemaske einer Steuerungssoftware ausgebildet sein.

Die Datenverarbeitungseinheit ordnet im Zuge des Kalibriervorganges jedem Sensor einen eigenen Korrekturwert zu, der die Höhenlage des jeweiligen Sensors wiedergibt. Die Bestimmung des Korrekturwertes kann auf unterschiedliche Weise erfolgen. Im einfachsten Fall misst der Anwender den Abstand des jeweiligen Sensors 4 zu einem Referenzpunkt im Verteilergestänge 2 aus. Der Referenzpunkt kann beispielsweise auf der Unterkante des Verteilergestänges 3 liegen, wie in Fig. 4 angedeutet. Andere Referenzpunkte sind möglich. Der Abstand zwischen dem Sensor und dem jeweiligen Referenzpunkt wird manuell in das Kalibriermenü der entsprechenden Steuerungssoftware eingegeben. Im Betrieb berücksichtigt die Datenverarbeitungseinheit bzw. Steuerungssoftware den Korrekturwert, wenn der jeweilige Sensor den Boden- oder Pflanzenabstand misst. Die unterschiedlichen Sensorhöhen können damit aus der Abstandsberechnung eliminiert werden.

Alternativ zur Einzelkalibrierung der Sensoren können die Sensoren gemeinsam kalibriert werden, wenn das Gestänge auf einer entsprechend großen Ebene ausgeklappt und so verfahren wird, dass der Abstand zwischen der Unterkante des Verteilergestänges 3 oder zwischen den Düsen und dem Boden einheitlich eingestellt ist. Anschließend wird das Kalibriermenü aktiviert und die aktuell gemessenen Abstandswerte der Sensoren 4 jeweils als Korrekturwerte für den einzelnen Sensor erfasst. Alternativ kann unter jedem einzelnen Sensor eine Platte oder eine entsprechende flache Reflexionsfläche mit konstantem Abstand zur Gestängeunterkante gehalten werden.

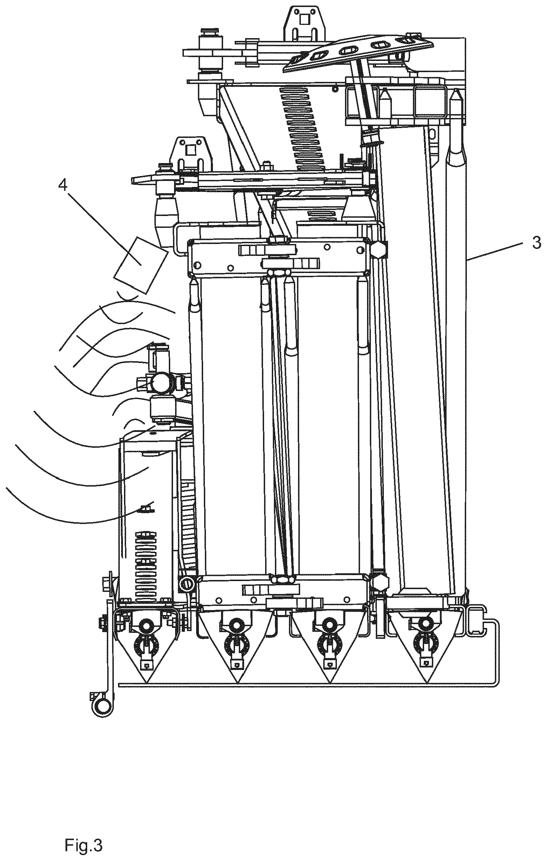

Die Kalibrierung der Sensoren kann zusätzlich dazu verwendet werden, um Fehlmessungen zu vermeiden, die beispielsweise dann auftreten können, wenn die Sensoren im eingeklappten Zustand des Verteilergestänges verwendet werden. Ein Beispiel für einen solchen eingeklappten Zustand des Verteilergestänges ist in Fig. 3 dargestellt. In Fig. 3 ist gut zu erkennen, dass ein Teil der vom Sensor 4 ausgesandten Signale nicht vom Boden, sondern vom Verteilergestänge 3 reflektiert werden. Dadurch ist der gemessene Abstand kleiner als der tatsächliche Abstand des Verteilergestänges 3 zum Boden. In einem solchen Fall kann der zu dem jeweiligen Sensor 4 abgespeicherte Korrekturwert als Vergleichswert herangezogen werden, um eine Plausibilitätsprüfung hinsichtlich der empfangenen Abstandssignale durchzuführen. In Abhängigkeit vom gemessenen Abstandswert und dem jeweils gespeicherten Korrekturwert kann dann eine Fehlermeldung durch die Datenverarbeitungseinheit generiert werden. Im einfachsten Fall wird die Fehlermeldung dann ausgegeben, wenn der gemessene Abstandswert kleiner als der Korrekturwert ist, wie dies im Fall der Abschattung gemäß Fig. 3 ist.

Die Plausibilitätsprüfung kann dadurch verbessert werden, dass die Position des Sensors, die Art des Gestänges und der Klappzustand der einzelnen Ausleger berücksichtigt wird. Diese erweiterte Plausibilitätsprüfung ist sinnvoll, weil ein Sensor 4 nicht zwangsläufig durch ein eingeklapptes Auslegerelement bzw. einen Teil des Verteilergestänges 3 behindert werden muss. In der Praxis kann auch ein reales Hindernis einen Abstandswert ergeben, der kleiner als der vorgegebene Korrekturwert für die Position des Sensors 4 im Verteilergestänge 3 ist. In diesem Fall kann eine falsche Fehlermeldung durch die Berücksichtigung weiterer Kriterien vermieden werden.

## Patentansprüche

1. Regel- oder Steuersystem für eine landwirtschaftliche Maschine (2) mit einem Verteilergestänge (3), insbesondere einem ein- und ausklappbaren Verteilergestänge (3), zum Ausbringen von Material, wie Düngemittel, Pflanzenschutzmittel oder Saatgut, mit mehreren Sensoren (4) zur Ermittlung des Boden- und/oder Pflanzenabstands vom Verteilergestänge (3), die unterschiedlich positioniert sind, und einer Datenverarbeitungseinheit zur Verarbeitung der Signale der Sensoren (4), **dadurch gekennzeichnet, dass** die Datenverarbeitungseinheit für die Kalibrierung der Sensoren (4) konfiguriert ist, wobei die Datenverarbeitungseinheit bei der Kalibrierung für jeden Sensor (4) einen Korrekturwert in Abhängigkeit von seiner Höhenlage bestimmt und den Korrekturwert bei der Boden- und/oder Pflanzenabstandsermittlung berücksichtigt.

2. System nach Anspruch 1, **dadurch gekennzeichnet, dass** die Datenverarbeitungseinheit den Korrekturwert mit dem jeweils gemessenen Abstandswert im eingeklappten Zustand des Verteilergestänges (3) vergleicht und eine Fehlermeldung in Abhängigkeit vom gemessenen Abstandswert und dem Korrekturwert ausgibt.

3. System nach Anspruch 2, **dadurch gekennzeichnet, dass** die Datenverarbeitungseinheit eine Fehlermeldung ausgibt, wenn der Abstandswert kleiner als der Korrekturwert ist, wobei insbesondere der fehlerhafte Sensor automatisch bei einer Regelung unberücksichtigt bleibt.

4. System nach Anspruch 2 oder 3, **dadurch gekennzeichnet, dass** die Datenverarbeitungseinheit bei der Ausgabe der Fehlermeldung die Sensorposition und/oder die Bauart des Verteilergestänges (3) und/oder den Klappzustand des Verteilergestänges (3) berücksichtigt, wobei insbesondere der fehlerhafte Sensor automatisch abgeschaltet wird.

5. Landwirtschaftliche Maschine zum Ausbringen von Material, wie Düngemittel, Pflanzenschutzmittel oder Saatgut, mit einem Vorratsbehälter, der mit einem Abgabeorgan für das Material verbunden oder verbindbar ist, einem klappbaren Verteilergestänge (3) und einem Regel- oder Steuersystem nach einem der vorhergehenden Ansprüche.

6. Verfahren zum Betreiben einer landwirtschaftlichen Maschine (2), bei dem Material, wie Düngemittel, Pflanzenschutzmittel oder Saatgut, aus einem Vorratsbehälter durch ein, insbesondere klappbares, Verteilergestänge (3) ausgebracht wird, das mehreren Sensoren (4) zur Ermittlung des Boden- und/oder Pflanzenabstands aufweist, wobei die Sensoren (4) kalibriert werden und für jeden Sensor (4) in Abhängigkeit von seiner Höhenlage ein Korrekturwert bestimmt wird, der bei der Boden- und/oder Pflanzenabstandsermittlung berücksichtigt wird.

7. Verfahren nach Anspruch 6, **dadurch gekennzeichnet, dass** der Korrekturwert mit dem von den Sensoren (4) jeweils gemessenen Abstandswert im eingeklappten Zustand des Verteilergestänges (3) verglichen und eine Fehlermeldung in Abhängigkeit vom gemessenen Abstandswert und dem Korrekturwert ausgegeben wird.

8. Verfahren nach Anspruch 6 oder 7, **dadurch gekennzeichnet, dass** zum Kalibrieren der Sensoren jeweils der vertikale Abstand zwischen einem Sensor (4) und einem Referenzpunkt gemessen wird, der im Betrieb der Maschine (2) relativ zum Sensor (4) ortsfest ist, wobei dieser gemessene vertikale Abstand als Korrekturwert bei der Boden- und/oder Pflanzenabstandsermittlung berücksichtigt wird.

9. Verfahren nach Anspruch 8, **dadurch gekennzeichnet, dass** der Referenzpunkt die Unterkante des Verteilergestänges (3) umfasst.

10. Verfahren nach Anspruch 6 oder 7, **dadurch gekennzeichnet, dass** zum Kalibrieren der Sensoren (4) das Verteilergestänge (3) vollständig ausgeklappt, über einer ebenen Fläche positioniert und zur Einstellung eines einheitlichen Kalibrierabstands zwischen dem Verteilergestänge (3) und der Fläche parallel zu dieser ausgerichtet wird, wobei der jeweilige Kalibrierabstand zwischen der Fläche und den Sensoren (4) gemessen und als Korrekturwert bei der Boden- und/oder Pflanzenabstandsermittlung berücksichtigt wird.

11. Verfahren nach Anspruch 6 oder 7, **dadurch gekennzeichnet, dass** zum Kalibrieren der Sensoren unter dem jeweiligen Sensor (4) eine Platte mit einem vorgegebenen Kalibrierabstand zum Verteilergestänge (3) angeordnet wird, wobei der jeweilige Kalibrierabstand zwischen der Platte und dem jeweiligen Sensor (4) gemessen und als Korrekturwert bei der Boden- und/oder Pflanzenabstandsermittlung berücksichtigt wird.

12. Verfahren zum Herstellen einer landwirtschaftlichen Maschine zum Ausbringen von Material, wie Düngemittel, Pflanzenschutzmittel oder Saatgut, mit einem Vorratsbehälter, der mit einem Abgabeorgan für das Material verbunden oder verbindbar ist, einem, insbesondere klappbaren, Verteilergestänge (3) und einem Regel- oder Steuersystem nach einem der Ansprüche 1 bis 4, bei dem die Sensoren (4) zur Ermittlung des Boden- und/oder Pflanzenabstands in verschiedenen Höhenlagen am Verteilergestänge (3) befestigt werden.

## Claims

1. Closed-loop or open-loop control system for an agricultural machine (2) having a distribution rod system (3), in particular a distribution rod system (3) which can be folded in and out, for discharging material, such as fertilizer, crop protection products or seed, having a plurality of sensors (4) for determining the ground clearance and/or distance from the plants of the distribution rod system (3), which sensors (4) are positioned differently, and a data processing unit for processing the signals of the sensors (4), **characterized in that** the data processing unit is configured to calibrate the sensors (4), wherein during the calibration process the data processing unit determines a correction value for each sensor (4) as a function of its height, and takes into account the correction value during the determination of the ground clearance and/or distance from the plants.

2. System according to Claim 1, **characterized in that** the data processing unit compares the correction value with the respectively measured distance value in the folded-in state of the distribution rod system (3) and outputs a fault message as a function of the measured distance value and the correction value.

3. System according to Claim 2, **characterized in that** the data processing unit outputs a fault message if the distance value is smaller than the correction value, wherein in particular the faulty sensor is automatically left discounted during closed-loop control.

4. System according to Claim 2 or 3, **characterized in that** during the outputting of the fault message the data processing unit takes into account the sensor position and/or the design of the distribution rod system (3) and/or the folded state of the distribution rod system (3), wherein in particular the faulty sensor is switched off automatically.

5. Agricultural machine for discharging material, such as fertilizer, crop protection products or seed, having a reservoir container which is or can be connected to a discharge element for the material, a foldable distribution rod system (3) and a closed-loop or open-loop control system, according to one of the preceding claims.

6. Method for operating an agricultural machine (2), in which material, such as fertilizer, crop protection products or seed, is discharged from a reservoir container through an, in particular, foldable, distribution rod system (3) which has a plurality of sensors (4) for determining the ground clearance and/or distance from the plants, wherein the sensors (4) are calibrated, and a correction value is determined for each sensor (4) as a function of its height and said correction value is taken into account during the determination of the ground clearance and/or distance from the plants.

7. Method according to Claim 6, **characterized in that** the correction value is compared with the distance value respectively measured by the sensors (4), in the folded-in state of the distribution rod system (3), and a fault message is output as a function of the measured distance value and the correction value.

8. Method according to Claim 6 or 7, **characterized in that** in order to calibrate the sensors, the vertical distance between a sensor (4) and a reference point which is positionally fixed relative to the sensor (4) during the operation of the machine (2) is respectively measured, wherein this measured vertical distance is taken into account as a correction value during the determination of the ground clearance and/or distance from the plants.

9. Method according to Claim 8, **characterized in that** the reference point comprises the lower edge of the distribution rod system (3).

10. Method according to Claim 6 or 7, **characterized in that** in order to calibrate the sensors (4) the distribution rod system (3) is folded out completely, positioned over a planar surface and is oriented in parallel with the surface in order to set a uniform calibration distance between the distribution rod system (3) and said surface, wherein the respective calibration distance between the surface and the sensors (4) is measured and is taken into account as a correction value during the determination of the ground clearance and/or distance from the plants.

11. Method according to Claim 6 or 7, **characterized in that** in order to calibrate the sensors a plate with a predefined calibration distance from the distribution rod system (3) is arranged under the respective sensor (4), wherein the respective calibration distance between the plate and the respective sensor (4) is measured and is taken into account as a correction value during the determination of the ground clearance and/or distance from the plants.

12. Method for manufacturing an agricultural machine for discharging material, such as fertilizer, crop protection products or seed, having a reservoir container which is or can be connected to a discharge element for the material, an, in particular foldable, distribution rod system (3) and a closed-loop or open-loop control system according to one of Claims 1 to 4, in which the sensors (4) for determining the ground clearance and/or distance from the plants are attached at various heights on the distribution rod system (3) .

## Revendications

1. Système de régulation ou de commande pour une machine agricole (2), comprenant une tringlerie de distribution (3), notamment une tringlerie de distribution (3) déployable et escamotable, destinée à l'épandage de matières, comme de l'engrais, des produits phytosanitaires ou des semences, comprenant plusieurs capteurs (4) destinés à déterminer l'écart du sol et/ou des plantes par rapport à la tringlerie de distribution (3), lesquels sont positionnés différemment, et une unité de traitement de données destinée à traiter les signaux des capteurs (4), **caractérisé en ce que** l'unité de traitement de données est configurée pour l'étalonnage des capteurs (4), l'unité de traitement de données, lors de l'étalonnage de chaque capteur (4), déterminant une valeur de correction en fonction de sa position en hauteur et tenant compte de la valeur de correction lors de la détermination de l'écart du sol et/ou des plantes.

2. Système selon la revendication 1, **caractérisé en ce que** l'unité de traitement de données compare la valeur de correction avec la valeur d'écart respectivement mesurée à l'état escamoté de la tringlerie de distribution (3) et délivre un message d'erreur en fonction de la valeur d'écart mesurée et de la valeur de correction.

3. Système selon la revendication 2, **caractérisé en ce que** l'unité de traitement de données délivre un message d'erreur lorsque la valeur d'écart est inférieure à la valeur de correction, le capteur défectueux étant automatiquement ignoré lors d'une régulation.

4. Système selon la revendication 2 ou 3, **caractérisé en ce que** l'unité de traitement de données, lors de la délivrance du message d'erreur, tient compte de la position du capteur et/ou de la construction de la tringlerie de distribution (3) et/ou de l'état de rabattage de la tringlerie de distribution (3), le capteur défectueux étant notamment mis automatiquement hors circuit.

5. Machine agricole destinée à l'épandage de matières, comme de l'engrais, des produits phytosanitaires ou des semences, comprenant un réservoir qui est relié ou peut être relié à un organe de délivrance pour les matières, une tringlerie de distribution (3) et un système de régulation ou de commande selon l'une des revendications précédentes.

6. Procédé pour faire fonctionner une machine agricole (2), selon lequel des matières, comme de l'engrais, des produits phytosanitaires ou des semences, sont épandues depuis un réservoir par une tringlerie de distribution (3), notamment rabattable, laquelle comprend plusieurs capteurs (4) destinés à déterminer l'écart du sol et/ou des plantes, les capteurs (4) étant étalonnés et une valeur de correction étant déterminée pour chaque capteur (4) en fonction de sa position en hauteur, laquelle est prise en compte lors de la détermination de l'écart du sol et/ou des plantes.

7. Procédé selon la revendication 6, **caractérisé en ce que** la valeur de correction est comparée à la valeur d'écart respectivement mesurée par les capteurs (4) à l'état escamoté de la tringlerie de distribution (3) et un message d'erreur est délivré en fonction de la valeur d'écart mesurée et de la valeur de correction.

8. Procédé selon la revendication 6 ou 7, **caractérisé en ce que** pour l'étalonnage des capteurs, l'écart vertical entre un capteur (4) et un point de référence est respectivement mesuré, lequel est en position fixe par rapport au capteur (4) lors du fonctionnement de la machine (2), cet écart vertical mesuré étant pris en compte comme valeur de correction lors de la détermination de l'écart du sol et/ou des plantes.

9. Procédé selon la revendication 8, **caractérisé en ce que** le point de référence comprend le bord inférieur de la tringlerie de distribution (3).

10. Procédé selon la revendication 6 ou 7, **caractérisé en ce que** pour l'étalonnage des capteurs (4), la tringlerie de distribution (3) est complètement déployée, positionnée au-dessus d'une surface plane et orientée parallèlement à la surface en vue de régler un écart d'étalonnage uniforme entre la tringlerie de distribution (3) et celle-ci, l'écart d'étalonnage respectif étant mesuré entre la surface et les capteurs (4) et pris en compte comme valeur de correction lors de la détermination de l'écart du sol et/ou des plantes.

11. Procédé selon la revendication 6 ou 7, **caractérisé en ce que** pour l'étalonnage des capteurs, une plaque est disposée sous le capteur (4) respectif à un écart d'étalonnage prédéfini par rapport à la tringlerie de distribution (3), l'écart d'étalonnage respectif entre la plaque et le capteur (4) respectif étant mesuré et pris en compte comme valeur de correction lors de la détermination de l'écart du sol et/ou des plantes.

12. Procédé de fabrication d'une machine agricole destinée à l'épandage de matières, comme de l'engrais, des produits phytosanitaires ou des semences, comprenant un réservoir qui est relié ou peut être relié à un organe de délivrance pour les matières, une tringlerie de distribution (3), notamment rabattable, et un système de régulation ou de commande selon l'une des revendications 1 à 4, selon lequel les capteurs (4) destinés à déterminer l'écart du sol et/ou des plantes sont fixés à différentes positions en hauteur sur la tringlerie de distribution (3).
